# EUROPEAN PATENT SPECIFICATION

(11) **EP 4 339 366 B1**
(45) Date of publication and mention of the grant of the patent: **22.04.2026**
(21) Application number: 21941021.4
(22) Date of filing: 14.05.2021
(51) Int. Cl.: E01C 5/00, E01C 9/08, B32B 7/08, E04F 15/02, F16B 4/00, F16B 5/00, F16B 5/06

(54) **HIGH-STRENGTH MODULAR FLOOR**
HOCHFESTER MODULARER BODEN
PLANCHER MODULAIRE À HAUTE RÉSISTANCE

(43) Date of publication of application: 20.03.2024
(73) Proprietor: Interestelar X SpA, Santiago (CL)
(72) Inventor: CRUZ QUIROGA, Francisco, Santiago (CL)
(74) Representative: Hoffmann Eitle
(86) International application number: PCT/CL2021/050038
(87) International publication number: WO 2022/236435

(56) References cited:
- WO-A1-96/04441
- DE-A1- 2 512 537
- DE-A1- 2 512 537
- US-A- 1 707 409
- US-A- 1 912 429
- US-A- 3 572 224
- US-A1- 2014 017 001
- US-A1- 2015 152 638
- US-A1- 2015 233 406
- US-A1- 2015 233 406
- US-A1- 2016 102 690

## Description

The invention relates to a floor module according to the preamble of claim 1.

More particularly, the invention relates to a versatile and adjustable high-strength modular floor for various industrial and commercial uses, formed by high-strength floor modules flexibly coupled and fastened together by one or more curved connectors which restrict flexibly the relative movement between floor modules coupled in the three Cartesian axes.

### BACKGROUND

In the field of construction of buildings or public or private spaces, modular floors are widely used as a constructive solution, both to temporarily improve the soil conditions at a working place and to provide a reusable floor that is simple to install and remove in temporary or permanent constructions. In most cases, modular floors seek to address challenges associated with installation complexity, installation/removal times, strength/durability, versatility of applications and environmentally friendly materials, among others.

Among the solutions proposed to address these challenges, the one exhibited in Patent US10156045B2 stands out, which presents a low-weight and reusable floor panel or cover system lighter than wooden floors and that can be placed in and removed from a working place quickly and easily. The panels that make up the solution in US10156045B2 seek to offer high durability, being preferably manufactured by molding plastic materials which may or may not be recycled. In this context, the solution in US10156045B2 proposes the joining of modular panels using rotating connectors arranged on the periphery of the panels in an overlapping area between adjacent panels. This joining solution between panels widely used in existing commercial solutions is simple and quick to operate, but it does not provide sufficient strength to the different stresses to which the panels are subjected during high-demand applications, such as support of heavy machinery or the construction of storage warehouses. Furthermore, said solution considerably reduces the flexibility of the floors completely preventing relative movements between adjacent panels.

Indeed, the rotating connector used in US10156045B2 offers greater strength to lateral stresses, for example, which occur due to the traffic of machinery, but its strength to vertical forces is lower, particularly in high tonnage applications. Furthermore, the strength to lateral forces is limited by the mechanical capabilities of the rotating connector, which removable, pressure fit nature and reduced diameter considerably weaken not only its tensile strength impairing the vertical strength, but also its strength to shear stresses limiting its lateral strength. On the other hand, the configuration of the connector prevents the transmission of any torsional stress on the floor, stiffening the connection between panels and preventing angular flexibility between them.

The same problems occur with the solutions exhibited in Patents US7303800B2 and US9506255B1 which use joining systems between similar panels using rotating connectors arranged in the perimeter. In these cases, the strength seeks to be improved through more robust connectors as in US7303800B2, or by increasing the number of connectors between panels as in US9506255B1. However, these solutions only improve the lateral and vertical strength increasing the costs of the solution with a lower contribution to the vertical strength, which remains focused on the adjustment characteristics of the rotating connector and no contribution to the flexibility of the union between panels.

On the other hand, Patent US10697130B2 provides a solution where a joining system between panels is combined using a rotating connector similar to the previous cases but using a more complex solution with wedge areas between panels. In this case, the combination of the joining systems using connectors and wedge areas increases the lateral strength of the floor particularly as a result of the shape characteristics of the wedge between panels. However, said fit between panels generates a lower contribution to the strength to vertical forces and no contribution to flexibility, so the solution in US10697130B2 not only presents difficulties associated with a lower vertical strength, but also restricts the flexibility of the union between panels.

In view of the above, there is a need for a modular floor that not only addresses the challenges that most modular floors face associated with simplicity of operation, installation/removal processes and time, durability and use of environmentally friendly materials, but at the same time offers high performance in terms of strength to lateral and vertical forces generating a floor with a flexible union between floor modules, being useful for applications with high mechanical demand and with sufficient resilience to resist torsional stress and adapt to terrain irregularities.

In this context, the invention seeks to be an alternative to current solutions focusing on offering a modular floor with the following characteristics, high strength to load and torsion; easy configuration and assembly; with different coupling or hooking structures between floor modules; that allows expansion due to the effects of heat; suitable for being manufactured using different plastic materials, providing different mechanical properties (flexion, torsion, traction, shear, etc.); that can be manufactured at low cost and in series; efficient in storage and transportation; recyclable; and suitable for using a diverse number of recycled materials sources in its manufacturing.

US 2014/017001 A1 discloses features falling under the preamble of claim 1. US 2015/233406 A1, US 2015/152638 A1, DE 25 12 537 A1, US 2016/102690 A1, WO 96/04441 A1, US 1,912,429 A, US 1,707.409 A, and US 3,572,224 A are further prior art.

Having said the above, the invention is described below in relation to its essential characteristics, preferred embodiments and technical problems that are sought to solve in comparison with similar solutions.

### DESCRIPTION OF THE INVENTION

The invention relates to a floor module having the features of claim 1.

Further preferred embodiments are defined by the features of dependent claims 2-15.

The floor modules of the invention are connected to each other by means of an overlapping system, that is, a system where the body of a floor module overlaps and joins with part of the body of an adjacent floor module generating a common structure. The use of the overlapping system allows generating large sections of floor modules joined together which not only behave as a single high-strength structure distributing the loads between modules, but at the same time behave as a flexible structure allowing them to settle in uneven terrain and in the expansions inherent to the material and temperature changes.

In this context, one of the main objectives of the invention is to generate a modular floor in which the floor modules are joined or connected to each other in a secure but flexible manner, that is, that simultaneously:
- restrict relative movement between coupled floor modules in the three Cartesian axes (x, y, z) to avoid relative displacements between said modules, and
- provide flexibility to the joint between coupled floor modules allowing relative angular movement between said modules, so that the joint can adjust and adapt without breaking or releasing.

Particularly, the invention includes a curved connector for flexibly securing coupled floor modules together. According to the preferred embodiment, the curved connector is formed by a single-piece body that comprises a perimeter curved portion and a central curved portion. Between said perimeter curved portion and said central curved portion there is at least one passage that has curved walls formed by the perimeter curved and central curved portions. Furthermore, said passage has an inlet end and a locking end, wherein said locking end comprises a locking mechanism. That is, the locking mechanism is located inside the at least one passage of the curved connector. According to one embodiment, the curved connector is symmetrical in a transverse plane presenting two passages, one on each side of said plane.

When the floor modules are coupled the at least one passage of the curved connector is configured to receive therein an upper curved surface coupled to a lower curved surface of coupled floor modules. In this configuration, the curved walls of the passage flexibly constrain a relative movement between the coupled floor modules in the three Cartesian axes. In this regard, to flexibly restrict said relative movement in the three Cartesian axes, the curved connector blocks the coupling between upper and lower curved surfaces by means of a rotation movement of this through a curved connector slot that said upper and lower curved surfaces have. In this way, the at least one passage of the curved connector receives said coupled upper and lower curved surfaces which enter to the at least one passage from the inlet end and slide through said at least one passage to the locking end. Thereby, the locking mechanism is activated at the locking end of the passage locking the curved connector in a flexible locking position of the curved connector in which the at least one passage comprises a locking space that allows relative sliding between the coupled upper and lower curved surfaces locking the curved connector in the flexible locking position of the curved connector and flexibly securing the coupled floor modules to each other.

The locking space comprising the at least one passage of the curved connector towards its locking end, in the flexible locking position of the curved connector, is a portion of the passage that allows relative sliding between floor modules once it has been activated the locking mechanism. Said locking space provides the necessary flexibility to the union between coupled floor modules allowing angular movement between said modules but maintaining the restriction on relative displacement between them.

The invention relates to a floor module for forming a modular floor of two or more coupled floor modules flexibly fastened to each other. The floor module is formed by a single-piece body that comprises a lower portion and an upper portion, wherein the upper and lower portions are arranged relative to each other generating perimeter overlapping areas. In this way, a lower perimeter overlapping area is arranged in the lower portion of the body and an upper perimeter overlapping area is arranged in the upper portion of the body, wherein the upper overlapping area comprises at least one upper curved surface and the lower overlapping area comprises at least one lower curved surface, said at least one upper curved surface and at least one upper curved surface comprising a curved connector slot.

When the floor modules are coupled, the at least one upper curved surface is configured to couple to the at least one lower curved surface of the coupled floor modules and through the curved connector defined above, the relative movement between the coupled floor modules is flexibly constrained in the three Cartesian axes generating a flexible coupling between the coupled floor modules. As highlighted, said curved connector blocks the coupling between upper and lower curved surfaces by means of a rotation movement thereof through the curved connector slot, so that the at least one passage of the curved connector receives said upper and lower curved surfaces which enter to the at least one passage from the inlet end and slide through said at least one passage to the locking end. This activates the locking mechanism of the curved connector, locking the curved connector in a flexible locking position of the curved connector and flexibly securing the coupled floor modules to each other.

Finally, according to the preferred embodiment, the invention also refers to a modular floor formed by two or more coupled floor modules flexibly fastened to each other, characterized in that it comprises:
- at least one curved connector as defined above; and
- two or more floor modules as defined above.

In this context, at least part of the upper perimeter overlapping area of a first floor module is coupled to at least part of the lower perimeter overlapping area of a second floor module, so that at least one upper curved surface of the first floor module is coupled with at least one lower curved surface of the second floor module. With this, the coupling of the first floor module with the second floor module is achieved.

When the first floor module is coupled to the second floor module, the coupling between the at least one upper curved surface and the at least one lower curved surface is locked by a rotational movement of the curved connector through a curved connector slot that said upper and lower curved surfaces have. Thereby, the at least one passage of the curved connector receives said coupled upper and lower curved surfaces which enter the at least one passage from the inlet end and slide through said at least one passage to the locking end. This activates the locking mechanism locking the curved connector in a flexible curved connector locking position and flexibly securing the coupled floor modules together.

According to one embodiment, the locking mechanism of the curved connector comprises a locking flange and a locking notch inside the at least one passage at its locking end. Said locking notch is configured to receive, by pressure fit, a locking projection arranged on the upper curved surface of a floor module locking the curved connector in its flexible locking position by said pressure fit. This activates the locking mechanism. As indicated, the activation of the locking mechanism allows relative angular movement between coupled floor modules, thanks to the locking space that the at least one passage of the curved connector has.

According to another embodiment, the at least one passage of the curved connector may comprise a fixing mechanism arranged at its inlet end. Said fixing mechanism is configured to contact at least one of the coupled floor modules in the locking position of the curved connector, and to receive a releasable fixing element that releasably fixes the curved connector to the at least one of the floor modules.

According to another embodiment, the central curved portion of the curved connector may comprise a flat surface comprising at least one unlocking notch. The unlocking notch is configured to receive an unlocking tool that allows the locking mechanism to be deactivated by a rotational movement of the curved connector towards an unlocking position of the curved connector. The primary objective of the release notch is to facilitate the application of the force necessary to disengage the locking mechanism activated by a pressure fit during the securing of the modules with the curved connector.

On the other hand, according to another embodiment, each floor module may comprise at least four lower curved surfaces in the lower perimeter overlapping area and at least four upper curved surfaces in the upper perimeter overlapping area for the arrangement of at least two curved connectors for each edge of a module.

Furthermore, each floor module may comprise at least one lower support surface in the lower perimeter overlapping area and at least one upper support surface in the upper perimeter overlapping area. Then, when the floor modules are coupled, said lower and upper support surfaces of the coupled floor modules contact each other generating at least one support area. Alternatively, the lower and upper support surfaces may comprise at least one fixing hole for fixing the coupled floor modules by means of a fixing element fixing said coupled floor modules together in the support area.

According to another embodiment, each floor module may comprise at least one fitting hole in the lower perimeter overlapping area and at least one fitting projection in the upper perimeter overlapping area. Then, when the floor modules are coupled, the at least one fitting hole is configured to receive the at least one fitting projection of the coupled floor modules. Alternatively, the at least one fitting projection in the upper perimeter overlapping area is hollow and is configured to receive a stake that allows attachment of the coupled floor modules to the ground.

According to another embodiment, each floor module may comprise at least one lower locking hole in the lower perimeter overlapping area and at least one upper locking hole in the upper perimeter overlapping area. Then, when the floor modules are coupled, the at least one lower locking hole aligns with the at least one upper locking hole of the coupled floor modules. Thereby, said lower and upper locking holes are configured to receive a rotating connector which when inserted into the lower and upper locking holes and rotated to a locking position of the rotating connector, restricts relative vertical movement between coupled floor modules. Alternatively, the lower locking hole comprises a lower unlocking section and a lower locking section, wherein the lower locking section makes pressure contact with a locking element in the rotating connector to lock relative vertical movement between the coupled floor modules in the locking position of the rotating connector. Furthermore, the upper locking hole comprises, in the rotation direction of the rotating connector:
- an insertion section for insertion of the rotating connector into the upper locking hole;
- an upper locking section which fits with the lower locking section and with the locking position of the rotating connector, wherein the upper locking section further prevents return of the rotating connector to the insertion section permanently joining the rotating connector with the upper locking hole;
- a transition section through which the pressure contact between the locking element of the rotating connector and the lower locking section is gradually released; and
- an upper unlocking section which fits with the lower unlocking section in which the coupled floor modules can be decoupled.

The movement of the rotating connector between the upper locking section, the transition section and the upper unlocking section can be performed in a locking direction and in an unlocking direction by means of pressure fit mechanisms located between said sections. The rotating connector comprises at least one pressure fit projection cooperating with pressure fit flanges and notches in the upper locking hole. Additionally, an upper end of the rotating connector may comprise a notch or slot to facilitate rotation of the rotating connector by a user.

On the other hand, each floor module may comprise a cover that connects to the lower face of the lower portion of the floor module body, wherein said cover comprises a cover grid that fits with a module grid arranged on the lower face of said lower portion of the floor module configuring a reinforced grid. The cover comprises a slotted lower face for contact with the ground, and both the cover and the lower face comprise at least one perforation to receive a fixing element that fixes the cover to the body of the floor module.

Finally, according to one embodiment of the invention, the modular floor may comprise perimeter ramp sections, wherein said perimeter ramp sections comprise:
- a ramp lower overlapping area configured to couple with the upper perimeter overlapping area of a floor module; or
- a ramp upper overlapping area configured to couple with the lower perimeter overlapping area of a floor module.

Furthermore, the modular floor may comprise corner sections which are part of corner perimeter ramp sections comprising a single-piece body, or corner sections that are independent of the perimeter ramp sections.

Based on the above, the invention may comprise different coupling or union structures between floor modules, each coupling structure arranged in the upper and lower overlapping areas of each module. These coupling structures can be summarized as:
- curved coupling structure formed by the union of at least one curved connector with the respective upper and lower curved surfaces of coupled modules, wherein said curved connector locks the upper and lower curved surfaces of coupled modules in a curved connector locking position, restricting relative displacement between modules flexibly allowing angular movement between modules.
- support coupling structure formed by the coupling between coupled upper and lower support surfaces one on top of the other.
- fitting coupling structure formed by the coupling between at least one fitting hole and at least one fitting projection.
- rotating coupling structure formed by the union of at least one rotating connector with the respective upper and lower block holes, wherein said rotating connector blocks the relative vertical movement between modules in a rotating connector locking position.

Greater details of the invention including the different coupling structures between modules, can be seen in relation to the accompanying Figures.

### BRIEF DESCRIPTION OF THE FIGURES

As part of the present invention, the following representative Figures are exhibited which show preferred embodiments of the invention and, therefore, should not be considered as limitations to the definition of the claimed subject matter.
Fig. 1 shows a top perspective view of a floor module according to a preferred embodiment of the invention.
Fig. 2a and Fig. 2b show side and perspective views of the connection between floor modules according to a preferred embodiment of the invention.
Fig. 3a shows a perspective view of the arrangement of curved and rotating connectors in the overlapping area between floor modules, according to a preferred embodiment of the invention.
Fig. 3b shows a perspective view of the arrangement of curved and rotating connectors in the overlapping area between floor modules of Fig. 3a, eliminating one floor module to highlight the curved and rotating connectors.
Fig. 4a shows a perspective view of a floor module according to a preferred embodiment of the invention highlighting the upper and lower curved surfaces.
Fig. 4b shows top and bottom perspective views of the upper curved surface according to one embodiment of the invention.
Fig. 4c shows top and bottom perspective views of the lower curved surface according to one embodiment of the invention.
Fig. 4d shows a perspective view of the upper and lower curved surfaces coupled together, according to one embodiment of the invention.
Fig. 4e shows side and perspective views of the curved connector according to a preferred embodiment of the invention.
Fig. 4f shows a representative diagram of the rotation movement of the curved connector during its installation to block the coupling between upper and lower curved surfaces, according to a preferred embodiment of the invention.
Fig. 4g shows a detail of the locking mechanism that the curved connector and the upper curved surface have, in the locking position of the curved connector.
Fig. 5a shows a perspective view of a floor module according to a preferred embodiment of the invention, highlighting the upper and lower support surfaces.
Fig. 5b shows perspective views of the upper and lower support surfaces separately.
Fig. 5c shows a perspective view of the coupled upper and lower support surfaces.
Fig. 6a shows a perspective view of a floor module according to a preferred embodiment of the invention, highlighting the fitting holes and projections.
Fig. 6b shows perspective views of the fitting projection and the fitting hole, separately.
Fig. 6c shows a perspective view of the fitting projection coupled to the fitting hole.
Fig. 6d shows a perspective view of the fitting projection coupled to the fitting hole including a stake.
Fig. 7a shows a perspective view of a floor module according to a preferred embodiment of the invention, highlighting the upper and lower locking holes.
Fig. 7b shows perspective views of the upper locking hole with and without the rotating connector.
Fig. 7c shows perspective and sectional views of the rotating connector connected in the upper and lower locking holes.
Fig. 7d shows a bottom view of the upper locking hole, where the insertion, upper locking, transition and upper unlocking sections can be seen.
Fig. 7e shows sectional views of the rotating connector connected in the upper and lower locking holes.
Fig. 8a shows a perspective view of a floor module cover according to one embodiment of the invention.
Fig. 8b shows a bottom view of a floor module with a cover according to one embodiment of the invention.
Fig. 8c shows perspective views of the grid configuration of a floor module with and without a cover.
Fig. 9 shows a perspective view of the modular floor according to a preferred embodiment of the invention.

### DETAILED DESCRIPTION OF A PREFERRED EMBODIMENT

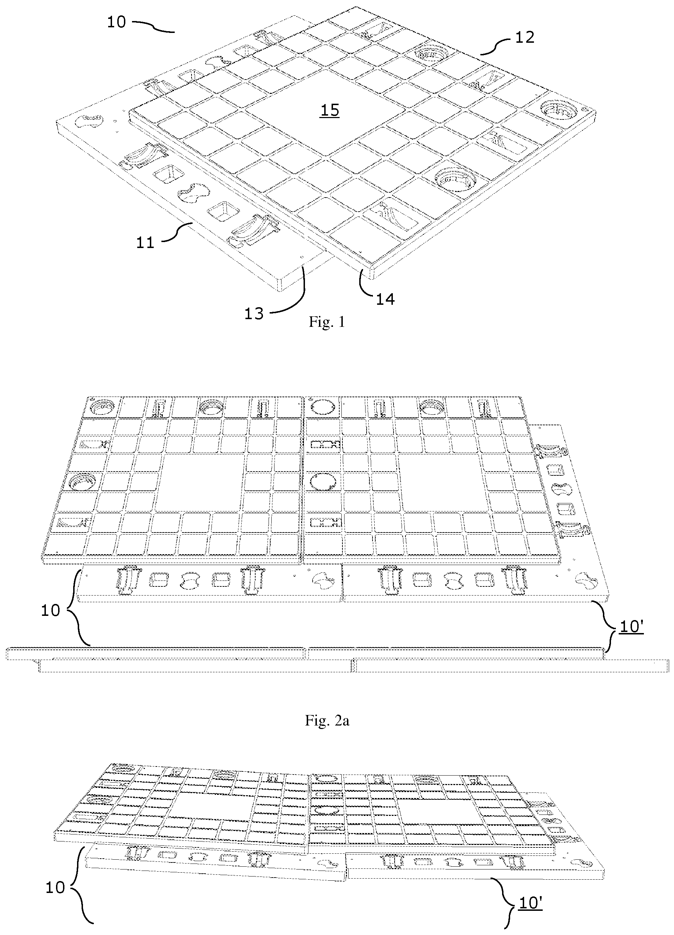

Fig. 1 shows a perspective view of a floor module (10) according to a preferred embodiment of the invention. In said Figure it is possible to appreciate that the floor module (10) is formed from a single piece body which comprises a lower portion (11) and an upper portion (12), said upper and lower portions arranged out of phase with each other to generate a lower perimeter overlapping area (13) and an upper perimeter overlapping area (14). According to one embodiment, the single-piece body that forms the floor module (10) is made of plastic material, preferably recycled plastic, and is formed by injection molding.

In Fig. 1 the arrangement of the curved, support, fitting and rotating coupling structures arranged in the lower and upper perimeter overlapping areas (13, 14) of the floor module (10) can be seen. Furthermore, in Fig. 1 it can be seen that the upper surface (12) of the floor module may comprise a square slotted and may have one or more larger smooth areas (15) which may be useful for the presentation of a commercial logo or text, for example, an embossed logo by injection molding along with the module body, by in-mold labeling during the injection process, or a label type logo adhered to the surface.

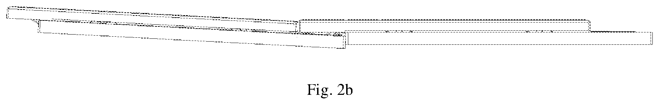

On the other hand, Fig. 2a and Fig. 2b show side and perspective views of two adjacent floor modules (10, 10') coupled together. In Fig. 2a it can be seen that the coupled modules (10, 10') are arranged joined by the coupling structures in the upper and lower overlapping areas forming a straight overlapping joint. On the other hand, in Fig. 2b it can be seen that said union through the coupling structures in the upper and lower overlapping areas can form an articulated union, thanks to the flexible securing proposed by the invention. As it has been highlighted, an articulated joint, or one that allows relative angular movement between coupled floor modules provides high resilience to the modular floor which is capable of better adapting to the irregularities of the terrain avoiding or at least reducing stresses or loads that said irregularities exert on the joint between modules during the installation and operation of the modular floor.

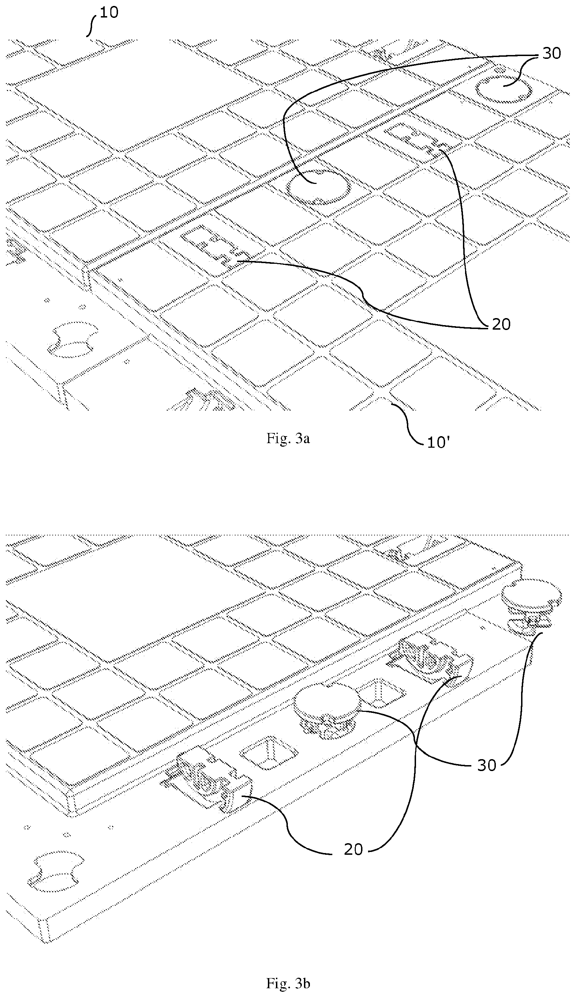

Fig. 3a shows a representative diagram of the overlapping area between modules, highlighting the arrangement of curved connectors (20) and rotating connectors (30) in said overlapping area. Indeed, Fig. 3a shows two curved connectors (20) and two rotating connectors (30) arranged in the same overlapping area to ensure coupling between adjacent floor modules (10, 10') by means of the curved coupling structures and rotary coupling. Furthermore, in less detail the support and fitting coupling structures can be seen, which also ensure the coupling between modules. Likewise, Fig. 3b shows in greater detail the two curved connectors (20) and the two rotating connectors (30), eliminating one of the floor modules from the representation. In this context, the characteristics of the different coupling structures exhibited by the invention are presented in detail below.

### Curved coupling structure

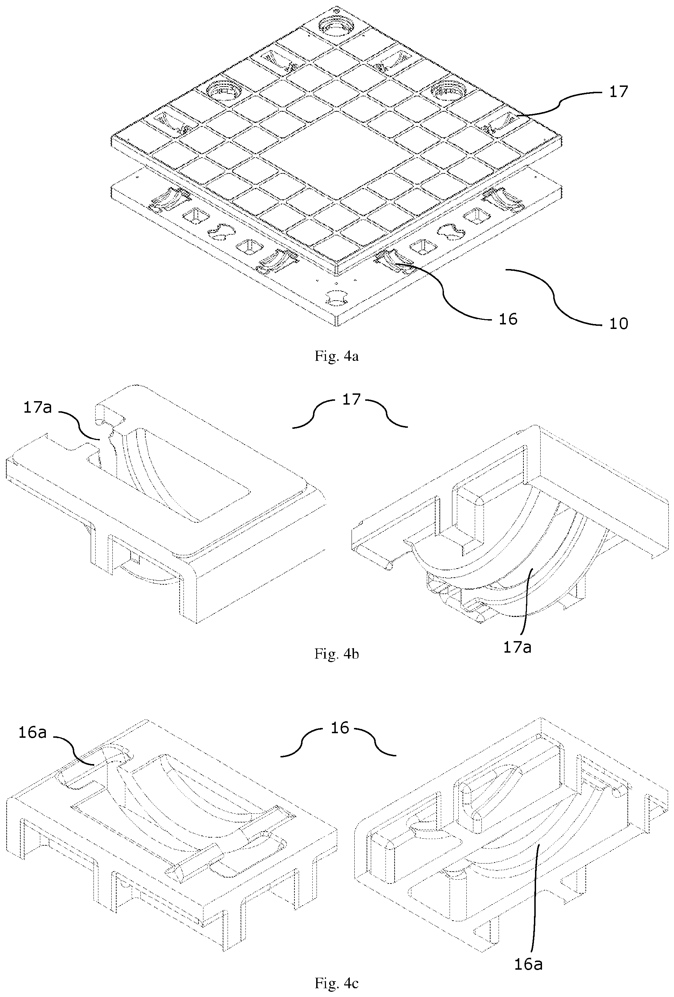

Figs. 4a-g show the preferred characteristics of the curved coupling structure that comprises the invention formed by a curved connector (20) that interacts with a lower curved surface (16) and an upper curved surface (17) of coupled floor modules. This coupling structure characterized by the curved connector (20) corresponds to the preferred coupling mechanism of the invention, allowing the coupling between modules of a modular floor to be flexibly fastened. In effect, the curved connector (20) upon coming into contact with the coupled lower and upper curved surfaces (16, 17) is capable of restricting the relative movement between the floor modules in the three Cartesian axes providing flexibility to said restriction of movement by allowing angular movement between modules and by distributing bending stresses throughout the contact surface of the curved connector (20) with the lower and upper curved surfaces (16, 17). In this sense, the curved connector generates a hinge type joint between modules that in small variations, is capable of absorbing bending and torsional stresses between adjacent modules while keeping the relative displacement between said modules restricted.

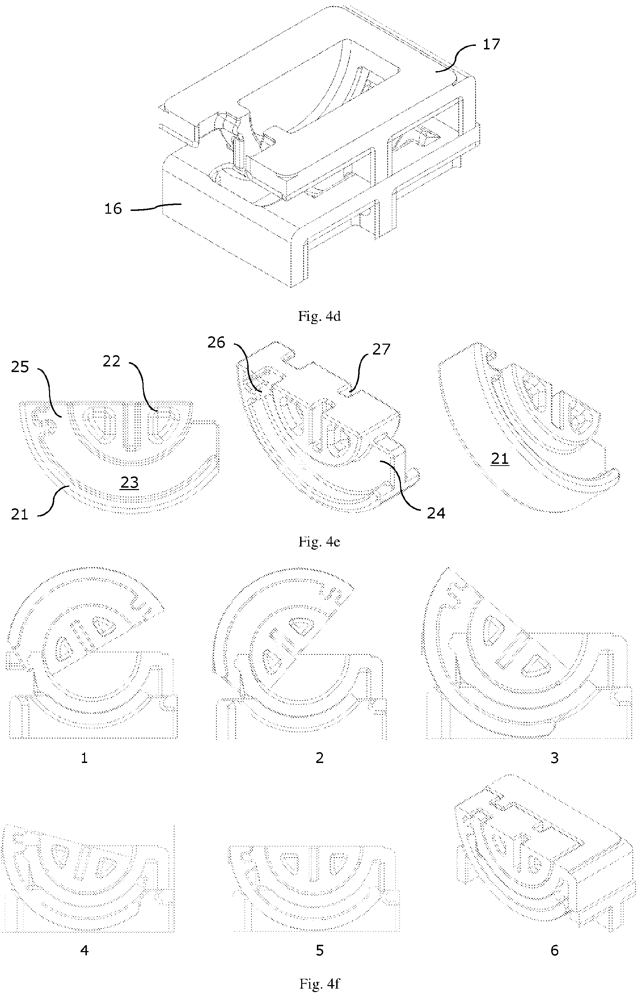

In Fig. 4a, a floor module can be seen in accordance with a preferred embodiment of the invention, where preferred locations of the curved coupling structures are highlighted, in this case, the lower and upper curved surfaces (16, 17). As it is possible to appreciate, said curved surfaces are arranged in the overlapping areas of the module and preferably they are configured equidistant and uniform in said overlapping areas, facilitating a uniform distribution of the load. In Fig. 4b, perspective views of the upper curved surface (17) of a floor module can be seen, highlighting the curved connector slot (17a) that is centrally arranged on said upper curved surface (17). Equivalently, in Fig. 4c there are perspective views of the lower curved surface (16) of a floor module, highlighting the curved connector slot (16a) also centrally arranged. In this context, it is important to outline that the curvature and components of the upper and lower curved surfaces must fit in a complementary manner facilitating a coupling between adjacent floor modules. Said coupling between curved surfaces is shown schematically in Fig. 4d.

On the other hand, Fig. 4e shows detailed views of the curved connector (20) according to the preferred embodiment being possible to see that it comprises a perimeter curved portion (21) and a central curved portion (22), wherein between the perimeter curved portion (21) and the central curved portion (22), at least one passage (23) is arranged which has curved walls formed by the perimeter curved and central curved portions (21, 22). Said passage (23) comprising an inlet end (24) and a locking end (25), where the locking end has a locking mechanism (26). Preferably, the structure of the curved connector is symmetrical in its longitudinal axis comprising two passages, one on each side of the connector. Furthermore, in Fig. 4e it is possible to see the unlocking notch (27) that the curved connector may comprise in its central curved portion (22) especially on the flat surface of said portion.

In Fig. 4f it is possible to appreciate the rotation movement by which the curved connector receives the coupled upper and lower curved surfaces, and by which the locking mechanism is activated when said surfaces are at the locking end of the curved connector passage. In fact, through stages 1 to 5 shown in Fig. 4f it is evident how the rotation movement of the connector ensures the coupling between the upper and lower curved surfaces activating the locking mechanism in stage 5 after overcoming a pressure fit force between stage 4 and 5. Stage 6 shows a perspective view of stage 5 with the curved connector in its locked position. In the same way, the curved connector can rotate in reverse from stage 5 to stage 1 unlocking the coupling between upper and lower curved surfaces. Preferably, for said unlocking, an unlocking tool is used which is inserted into the unlocking notches of the curved connector facilitating the application of a torque that exerts the necessary force to overcome the pressure fit force of the locking mechanism, deactivating it.

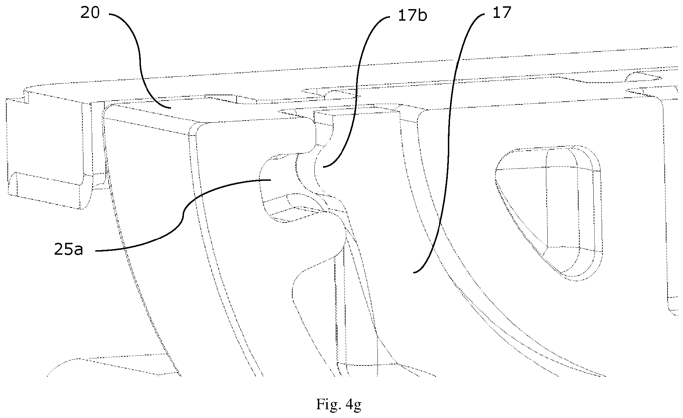

Finally, Fig. 4g shows a detail of the configuration between the curved connector (20) and the upper curved surface (17) in the locking position of the curved connector, being possible to see in detail the locking notch (25a) that the passage of said curved connector (20) has, and the locking projection (17b) that said upper curved surface of a floor module has. In fact, it is possible to see that the locking notch (25a) is preferably generated from one of the walls of the curved connector (20) passage facing the locking projection (17b) that the upper curved surface (17) has on its lower face. Furthermore, it is possible to see that the configuration of the notch and locking projection (25a, 25b) makes the locking generated by the curved connector more flexible allowing relative angular movements between coupled floor modules. As an example, enlarging the size of the locking notch (25a) provides greater angular movement space to the locking projection (17b) and, thereby, increases the relative sliding capacity between upper and lower curved surfaces on the locked position while the walls of the curved connector maintain the relative displacement constraint in the three Cartesian axes. Finally, in Fig. 4g it can be seen that the locking notch (25a) is delimited by a protuberance that separates said notch from the passage of the curved connector where the size of said protuberance is such that it ensures requiring a pressure fit between the curved connector (20) and the floor module, said pressure fit given by the contact between the protuberance of the locking notch (25a) and the locking projection (17b) when the curved connector (20) is inserted.

According to the preferred embodiment shown in Figs. 4a-g, the curved connector (20) has a semicircular appearance, as the lower and upper curved surfaces (16, 17).

### Support coupling structure

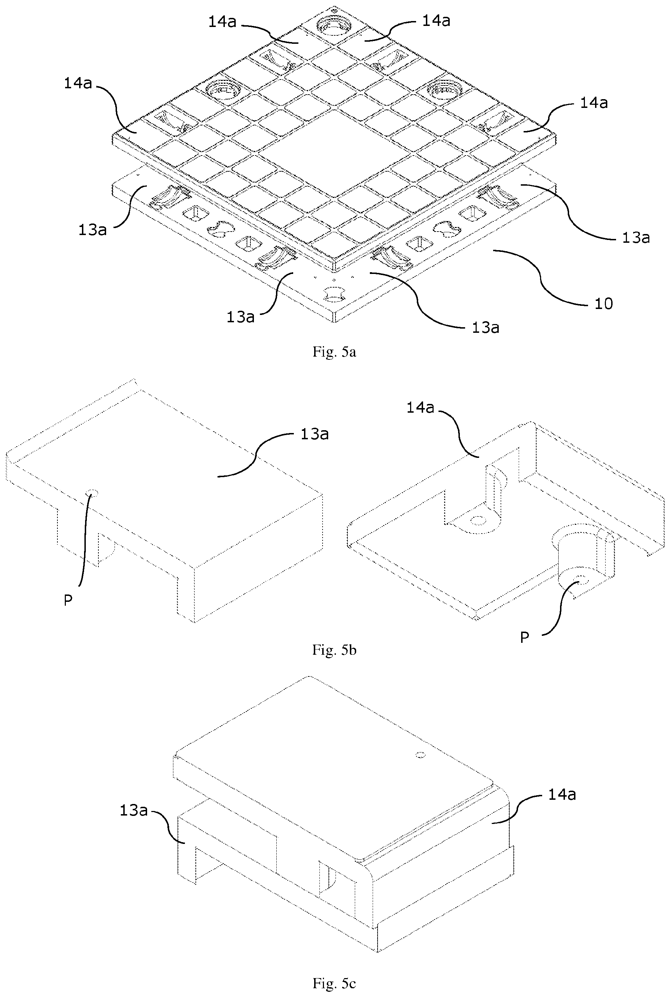

Figs. 5a-c shows the support coupling structure that the invention can implement, according to a preferred embodiment. Said support coupling structure is formed by at least one lower support surface (13a) formed in the lower perimeter overlapping area (13) and at least one upper support surface (14a) formed in the upper perimeter overlapping area (14) of each floor module. As shown in Fig. 5a, each floor module (10) comprises two support surfaces for each edge of the module in its preferred embodiment.

Fig. 5b shows perspective views of the lower support surface (13a) and of the lower support surface (13b), as an example, being possible to appreciate that they are not only configured to generate a support coupling between modules (see Fig. 5c), but can also provide smooth surfaces that are useful for commercial use and even incorporate fixing means between modules. In the latter case, screws can be implemented as fixing elements which fix two coupled modules through the fixing holes (P) that said support surfaces have, taking advantage of contact surfaces between modules.

Fig. 5c shows the coupling of the lower and upper support surfaces (13a, 13b) generating the support area between coupled floor modules. Preferably, when a floor module is coupled to four adjacent floor modules, said floor module has at least eight support areas where the lower and upper support surfaces of adjacent modules come into contact and distribute the loads among themselves.

### Fitting coupling structure

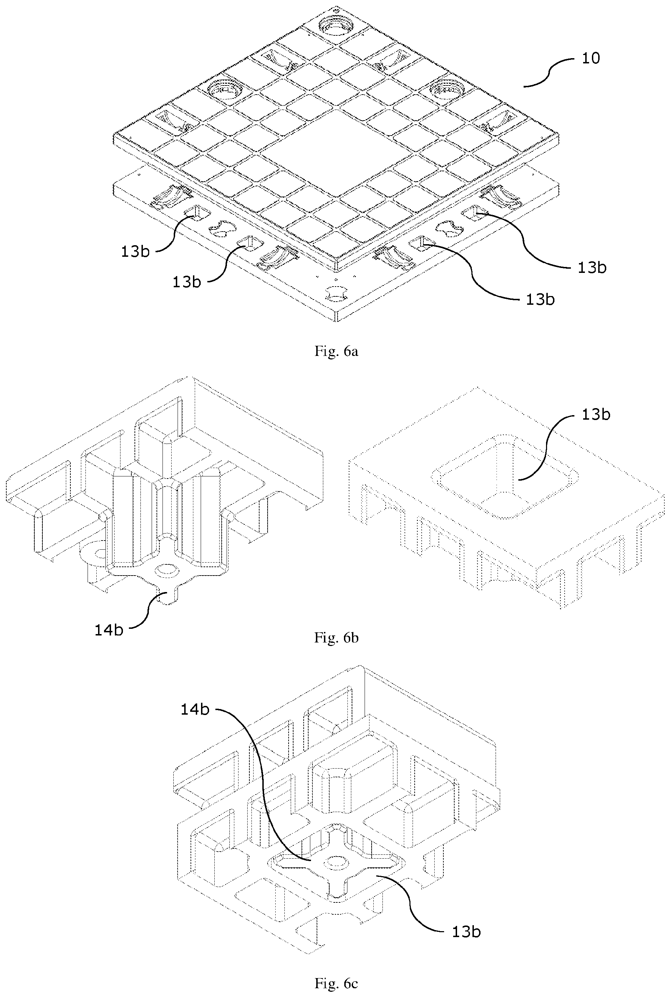

Figs. 6a-d show preferred configurations of the fitting coupling structure that the invention has, formed by fitting holes (13b), arranged in the lower overlapping area of each module, and fitting projections (14b) arranged in the upper overlapping area. In Fig. 6a it can be appreciated the arrangement of four fitting holes (13b) in the lower overlapping area, and the location of four fitting projections (14b) in the upper overlapping area stands out, not being able to see said fitting projections in Fig. 6a as they are projected towards the lower face of the floor module (10).

In this context, Fig. 6b shows perspective views of the fitting projection (14b) and the fitting hole (14a), preferably formed by a robust structure with a quadrangular appearance, where when the floor modules are coupled, the at least one fitting hole (13b) is configured to receive the at least one fitting projection (14b) of the coupled floor modules as shown in Fig. 6c. The purpose of the fitting coupling structure is to provide strength to the lateral movements of the floor. It is a robust structure considered to be the one that works the most and supports lateral forces on the joint between floor modules.

Preferably, the upper section consists of an fitting projection (14b) with a cubic section (male connector) that is inserted into the lower section (or female connector) forming the coupling. Both the male connector and the female connector have a bundle of nerves around them that increases the strength of the coupling structure.

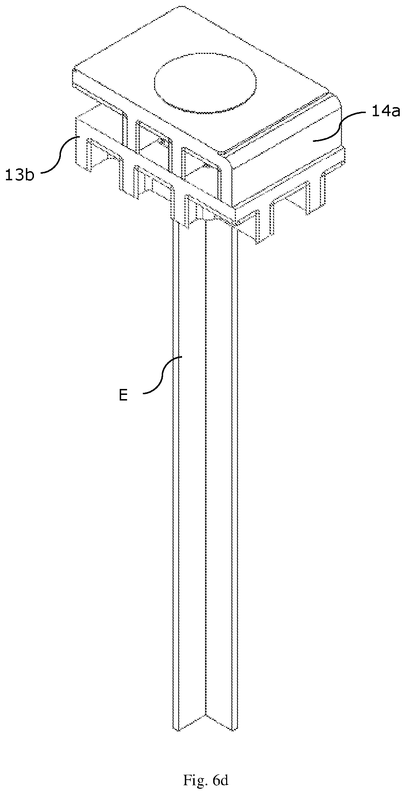

Additionally, the fitting projection (14b) can be hollow in its center, facilitating that after drilling, stakes (E) can be inserted to generate anchoring of floor modules attached to the ground. In this embodiment, the upper surface of the fitting projection (14b) may comprise a cross mark indicating where the perforation must be made so that it fits with the hole of the fitting projection (14b) and, at the same time, with the center of the fitting hole (13b). Fig. 6d shows an embodiment of an installed fitting coupling structure with stake (E).

### Rotating coupling structure

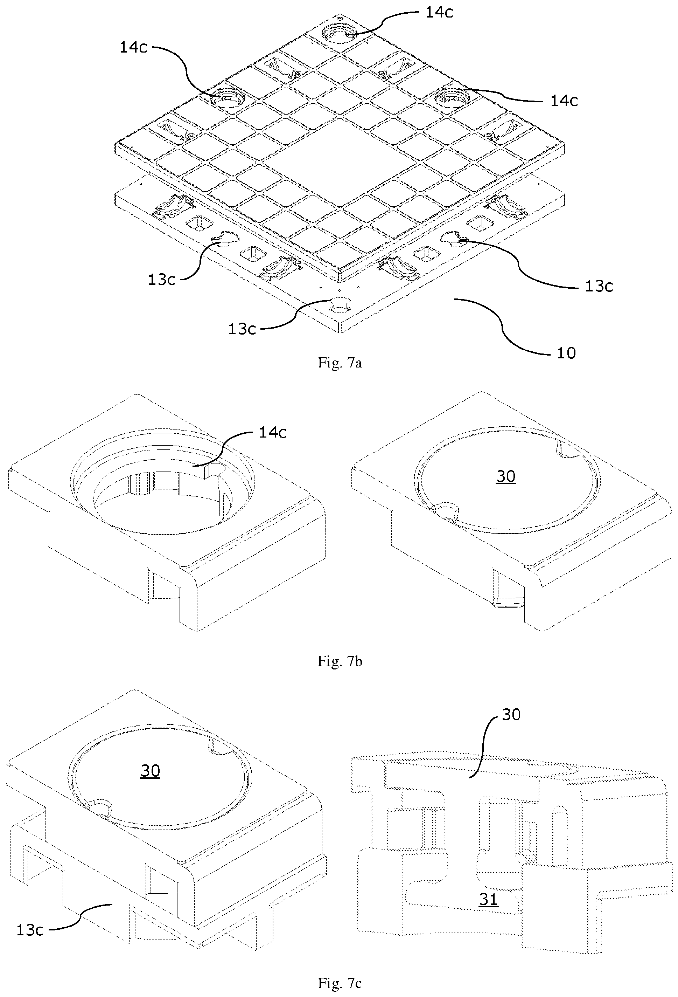

Figs. 7a-e show configurations of the rotating coupling structure formed by the connection of a rotating connector (30) with a lower locking hole (13c) and an upper locking hole (14c) arranged in adjacent floor modules. According to Fig. 7a, a preferred embodiment of the invention comprises six locking holes in total, three upper locking holes (14c) arranged in the upper overlapping area, and three lower locking holes (13c) arranged in the lower overlapping area.

As indicated, a rotating connector (30) is inserted into the upper and lower locking holes and, by rotating it, said rotating connector locks the relative vertical movement between coupled floor modules in a locking position of the rotating connector. According to the preferred embodiment, when the rotating connector (30) is rotated towards its locking position, it is inseparably joined to the upper locking hole (14c), preventing the rotating connector from being lost during assembly and disassembly operations of the modular floor (see Fig. 7b). Said characteristic of inseparable union between the rotating connector (30) and the upper locking hole (14c) does not prevent the rotating connector (30) from allowing the releasable locking of the lower locking hole (13c) when two floor modules are coupled (see Fig. 7c). In effect, both characteristics are complementary and are obtained by configuring different sections in the upper and lower locking holes which interact with the rotating connector (30) during its operation.

In this context, Fig. 7c shows a rotating connector (30) in its locking position, wherein a locking element (31) of the rotating connector (30) comes into contact by pressure with a lower locking section of the lower locking hole (13c). Said pressure contact allows to obtain a pressure rotating joint effect which increases the strength of the joint with the rotation of the connector.

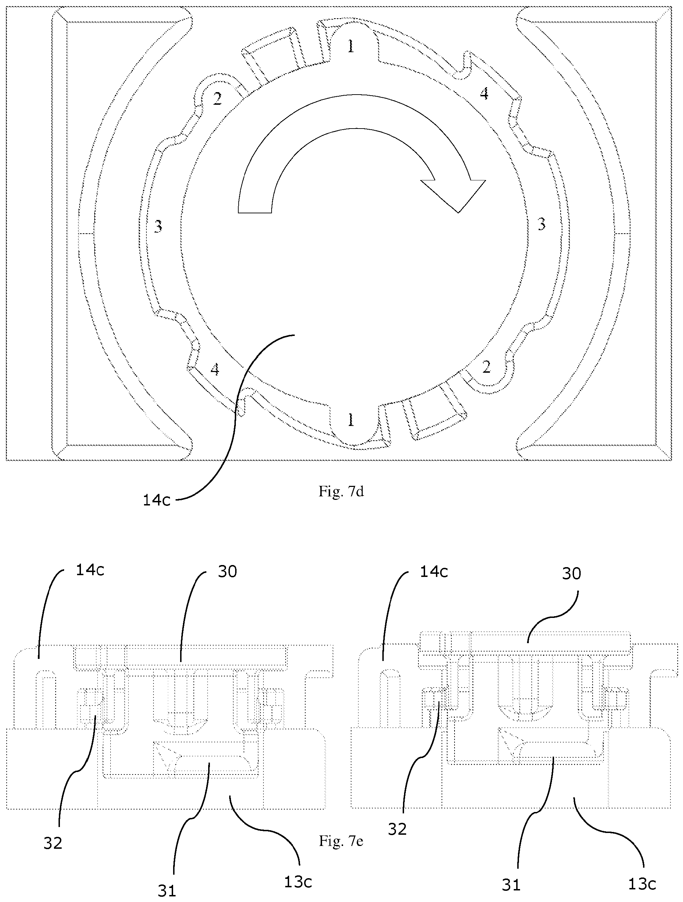

On the other hand, Fig. 7d shows different sections on the lower face of the upper locking hole (14c), which are arranged in the form of fitting notches and fitting flanges as pressure fit mechanisms, which interact with at least a pressure fit projection (32) comprising the rotating connector (see Fig. 7e). Specifically, Fig. 7d shows the detail of the design of the lower face of the upper locking hole (14c) which is intended to allow the insertion of the rotating connector (30) and keep it permanently attached to the upper locking hole (14c) by rotating in the direction of the arrow shown in Fig. 7d. It is a symmetrical design that preferably considers four operating sections:
1) Section No. 1 or insertion section is where the rotating connector is inserted. This section is only used once, since when turning the rotating connector and moving to section No. 4, it can never return to Section No. 1 to be removed.
2) Section No. 2 or upper unlocking section, is the open position section. In this position the upper and lower locking holes are not joined, and the floor modules can be decoupled.
3) Section No. 3 or transition section, is the connector path section. As the rotating connector rotates and travels through this section, the coupling between the upper and lower holes begins to lock on its vertical axis.
4) Section No. 4 is the upper locking section. In this position the upper and lower locking holes are locked, the upper locking section fitting with the lower locking section of the lower locking hole. It should be noted that, both to exit and enter sections No. 2 and No. 4, a force must be applied that exceeds the pressure fit force, since there is interaction between fitting notches and flanges in the floor modules with pressure fit projections on the rotating connector which narrows the path and forces the pressure fit projections on the connector to activate. The fitting flange of Section No. 4 (closed position) is larger, which means that a greater force (torque) must be applied to enter and exit this position compared to Section No. 2 (open position).

Through the previous configuration it is possible to see that the rotating connector (30) can move from section No. 1 to No. 4 and, from said position, move freely exceeding the pressure fits between sections No. 2, 3 and 4. As noted, the design of the embodiment prevents the rotating connector from returning to section No. 1.

By way of example, Fig. 7e shows the configuration of the pressure fit projections (32) comprising the rotating connector (30). Furthermore, it is appreciated that the design of the rotating connector (30) may allow a small vertical displacement within the upper locking hole (14c) of a floor module. This allows the rotating connector to better resist bumps and imperfections when trying to couple and fastening one module to another.

### Module cover

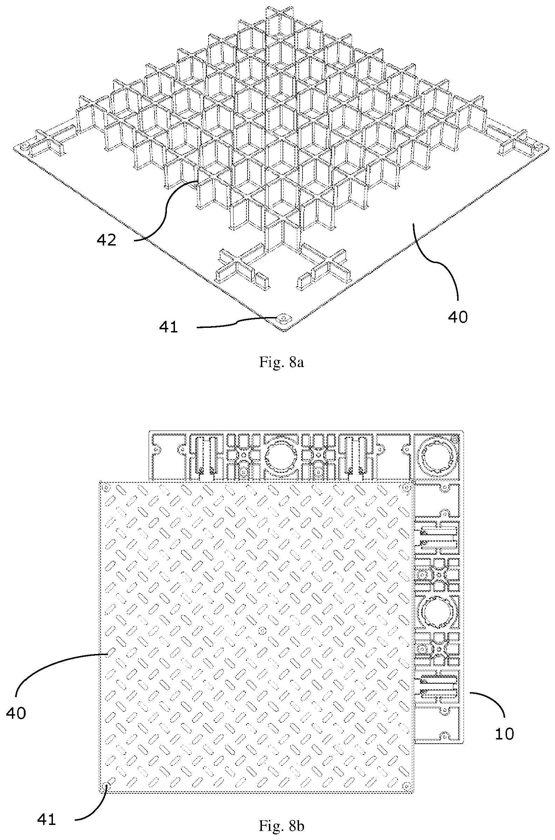

Although it is outside the coupling structures proposed by the invention, an alternative of this comprises a module cover (40) as shown in Figs. 8a-c. Said Figures show a floor module design that implements a cover (40) which connects to the lower face of the lower portion of the floor module body (10). Said cover (40) shown in Fig. 8a, is attached to the floor module (10) as shown in Fig. 8b, completely fitting with the lower portion that comes into contact with the ground during the operation of the modular floor. Said cover can be fastened to the floor module body (10) by means of one or more fixing elements (41) such as screws, preferably, four screws in the corners of the cover (40) and one in the center with the corresponding perforations both in the cover and on the lower side of the floor module.

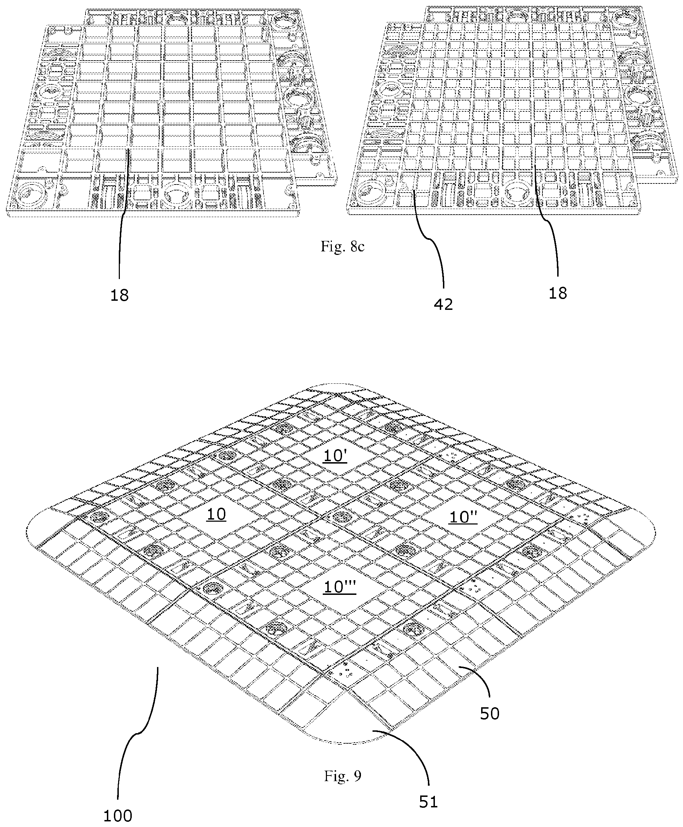

Alternatively, the cover comprises a cover grid (42) that when assembling the cover (40) with the floor module (10), fits with a floor module grid (18) arranged on the lower side of said lower portion of the floor module (10), as shown in Fig. 8c where the cover is represented only by the cover grids (42). Particularly, the design of the cover (40) consists of a grid of cross-shaped nerves that fit exactly with the lower square grid of the floor module (10). This practically doubles the support points of the floor. Then, by fitting both grids (of the cover and the module) a reinforced lower grid configuration is obtained, which increases the compression strength of the floor module.

Finally, in Fig. 9 an exemplary configuration of the modular floor (100) can be seen, formed by four floor modules (10, 10', 10'', 10‴) coupled together, wherein the perimeter of the modular floor comprises perimeter ramp sections (50) that are coupled to the lower or upper overlapping areas that are free after the coupling of the floor modules. Said ramp sections can be complemented with, or integrated into, corner sections (51) which configure a soft and uniform modular floor perimeter which reduces discontinuities with the floor where it is installed.

## Claims

1. A floor module (10) for forming a modular floor (100) of two or more coupled floor modules (10,10') flexibly fastened together by means of a curved connector (20), wherein the curved connector (20) is formed from a single-piece body comprising a perimeter curved portion (21) and a central curved portion (22);
wherein, between the perimeter curved portion (21) and the central curved portion (22) there is at least one passage (23) that has curved walls formed by the perimeter curved and central curved portions (21,22), an inlet end (24) and a locking end (25), said locking end (25) comprising a locking mechanism (26);
wherein the floor module (10) is formed from a single-piece body comprising a lower portion (11) and an upper portion (12), wherein the upper and lower portions (11,12) are arranged relative to each other, generating perimeter overlapping areas (13,14) for overlapping with the perimeter overlapping areas (13,14) of an adjacent such floor module (10);
wherein, a lower perimeter overlapping area (13) is arranged in the lower portion (11) of the body and an upper perimeter overlapping area (14) is arranged in the upper portion of the body (12);
**characterized in that** the upper overlapping area (14) comprises at least one upper curved coupling surface (17) and the lower overlapping area (13) comprises at least one lower curved coupling surface (16), said at least one upper curved coupling surface (17) and at least one lower curved coupling surface (16) comprising a curved connector slot (17a,16a);
wherein, when the floor modules (10,10') are coupled, the at least one upper curved coupling surface (17) is configured to couple to the at least one lower curved coupling surface (16) of the coupled floor modules (10,10'), and by means of the curved connector (20), a relative movement between the coupled floor modules (10,10') being flexibly constrained in the three Cartesian axes generating a flexible coupling between the coupled floor modules (10,10'), wherein said curved connector (20) locks the coupling between upper and lower curved coupling surfaces (17,16) by a movement of rotation thereof through the curved connector slot (17a,16a), so that the at least one passage (23) of the curved connector (20) receives said coupled upper and lower curved coupling surfaces (17, 16) which enter the at least one passage (23) from the inlet end (24) and slide through said at least one passage (23) to the locking end (25), activating the locking mechanism (26) of the curved connector (20), locking the curved connector (20) in a flexible locking position of the curved connector (20);
wherein, in the flexible locking position of the curved connector (20), the at least one passage (23) comprises a locking space that allows relative sliding between the coupled upper and lower curved coupling surfaces (17,16), locking the curved connector (20) in the flexible locking position of the curved connector (20) and flexibly fastening the coupled floor modules (10,10') together.

2. The floor module (10) according to claim 1, **characterized in that** it comprises at least four lower curved coupling surfaces (16) in the lower perimeter overlapping area (13) and at least four upper curved coupling surfaces (17) in the upper perimeter overlapping area (14), for the arrangement of at least two curved connectors (20) on each edge of the floor module (10).

3. The floor module (10) according to claim 1 or claim 2, **characterized in that** it comprises at least one lower support surface (13a) in the lower perimeter overlapping area (13) and at least one upper support surface (14a) in the upper perimeter overlapping area (14), wherein, when the floor modules (10,10') are coupled, the lower and upper support surfaces (13a,14a) of the coupled floor modules (10,10') contact each other generating at least one support area.

4. The floor module (10) according to claim 3, **characterized in that** the lower and upper support surfaces (13a,14a) comprise at least one fixing hole (P) for fixing the coupled floor modules (10,10') by means of a fixing element, fixing said coupled floor modules (10,10') at the support area.

5. The floor module (10) according to any of claims 1 to 4, **characterized in that** it comprises at least one fitting hole (13b) in the lower perimeter overlapping area (13) and at least one fitting projection (14b) in the upper perimeter overlapping area (14), wherein, when the floor modules (10,10') are coupled, the at least one fitting hole (13b) is configured to receive the at least one fitting projection (14b) of the coupled floor modules (10,10').

6. The floor module (10) according to claim 5, **characterized in that** the at least one fitting projection (14b) in the upper perimeter overlapping area (14) is hollow and is configured to receive a stake (E) that allows the coupled floor modules (10,10') to be fixed to the ground.

7. The floor module (10) according to any of claims 1 to 6, **characterized in that** it comprises at least one lower locking hole (13c) in the lower perimeter overlapping area (13) and at least one upper locking hole (14c) in the upper perimeter overlapping area (14), wherein, when the floor modules (10,10') are coupled, the at least one lower locking hole (13c) aligns with the at least one upper locking hole (14c) of the coupled floor modules (10,10'), such that said lower and upper locking holes (13c,14c) are configured to receive a rotating connector (30) that when inserted into the lower and upper locking holes (13c,14c) and rotated to a rotating connector (30) locking position, it restricts a relative vertical movement between coupled floor modules (10,10').

8. The floor module (10) according to claim 7, **characterized in that**:
- the lower locking hole (13c) comprises a lower unlocking section and a lower locking section, wherein the lower locking section comes into pressure contact with a locking element (31) at the rotating connector (30), in order to lock the relative vertical movement between the floor modules (10,10') coupled in the rotating connector (30) locking position; and
- the upper locking hole (14c) comprises, in the direction of the rotating connector (30) rotation:
∘ an insertion section for inserting the rotating connector (30) into the upper locking hole (14c);
∘ an upper locking section which fits with the lower locking section and with the locking position of the rotating connector (30), wherein the upper locking section further prevents return of the rotating connector (30) to the insertion section permanently joining the rotating connector (30) with the upper locking hole (14c);
∘ a transition section through which the pressure contact between the locking element (31) of the rotating connector (30) and the lower locking section is gradually released; and
∘ an upper release section which fits in the lower release section in which the coupled floor modules (10,10') can be decoupled;
wherein the movement of the rotating connector (30) between the upper locking section, the transition section and the upper unlocking section can be carried out in a locking direction and in an unlocking direction by means of pressure fit mechanisms located between said sections, wherein the rotating connector (30) comprises at least one pressure fit projection (32) cooperating with pressure fitting flanges and fitting notches in the upper locking hole (14c).

9. The floor module (10) according to any of claims 1 to 8, **characterized in that** it comprises a cover (40) that connects to the lower face of the lower portion (11) of the floor module body, wherein said cover (40) comprises a cover grid (42) that fits with a floor module grid (18) arranged on the lower face of said lower portion (11) of the floor module (10), wherein said cover (40) comprises a slotted lower face for contact with the ground, and wherein said cover (40) and said lower face comprise at least one perforation to receive a fixing element (41) that fixes the cover (40) to the floor module body.

10. A modular floor (100) formed by two or more coupled floor modules (10,10') according to any of claims 1 to 9 and at least one curved connector (20) formed from a single-piece body comprising a perimeter curved portion (21) and a central curved portion (22);
wherein, between the perimeter curved portion (21) and the central curved portion (22) there is at least one passage (23) that has curved walls formed by the perimeter curved and central curved portions (21,22), an inlet end (24) and a locking end (25), said locking end (25) comprising a locking mechanism (26);
wherein at least part of the upper perimeter overlapping area (14) of a first floor module (10) is coupled to at least part of the lower perimeter overlapping area (13) of a second floor module (10'), so that at least one upper curved coupling surface (17) of the first floor module (10) couples with at least one lower curved coupling surface (16) of the second floor module (10'), resulting in the coupling of the first floor module with the second floor module (10');
wherein the coupling between the at least one upper curved coupling surface (17) and the at least one lower curved coupling surface (16) is locked by a rotation movement of the at least one curved connector (20) through the curved connector slots (16a,17a) that said upper and lower curved surfaces (16,17) have, so that the at least one passage (23) of the at least one curved connector (20) receives said coupled upper and lower curved coupling surfaces (16,17) which enter the at least one passage (23) from the inlet end (24) and slide through said at least one passage (23) to the locking end (25), activating the locking mechanism (26) in a flexible locking position of the at least one curved connector (20), so that the curved walls of the passage (23) flexibly restrict a relative movement between the floor modules (10,10') coupled in the three Cartesian axes generating a flexible coupling between the coupled floor modules;
wherein, in the flexible locking position of the at least one curved connector (20), the at least one passage (23) comprises a locking space that allows relative sliding between the coupled upper and lower curved coupling surfaces (16,17) locking the at least one curved connector (20) in the locking position of the at least one curved connector (20) and flexibly fastening the coupled floor modules (10,10') to each other.

11. The modular floor (100) according to claim 10, **characterized in that** it comprises at least one rotating connector (30) which, when the floor modules (10,10') are coupled, is received in lower and upper locking holes (13c,14c) of the coupled floor modules (10,10'), wherein, when the rotating connector (30) is inserted into the upper and lower locking holes (13c,14c) and is rotated to a locking position of the rotating connector (30), it restricts a relative vertical movement between coupled floor modules (10,10').

12. The modular floor (100) according to claim 10, **characterized in that** it comprises perimeter ramp sections (50), wherein said perimeter ramp sections (50) comprise:
- a ramp lower overlapping area configured to couple to the upper perimeter overlapping area (14) of a floor module (10); or
- a ramp upper overlapping area configured to couple to the lower perimeter overlapping area (13) of a floor module (10); and,
wherein the modular floor (100) also comprises corner sections (51) which are part of the corner perimeter ramp sections (50) comprising a single-piece body, or which are independent of the perimeter ramp sections (50).

13. The modular floor (100) according to any of claims 10 to 12, **characterized in that** the locking mechanism (26) of the at least one curved connector (20) comprises a locking flange and a locking notch (25a) inside the at least one passage (23) at its locking end (25), wherein said locking notch (25a) is configured to receive, by pressure fit, a locking projection (17b) arranged on the upper curved coupling surface (17), locking the at least one curved connector (20) in its flexible locking position by said pressure fit activating the locking mechanism (26).

14. The modular floor (100) according to claim 13, **characterized in that** the at least one passage (23) of the at least one curved connector (20) comprises a fixing mechanism arranged at its inlet end, wherein said fixing mechanism is configured to contact at least one of the floor modules (10,10') coupled in the locking position of the at least one curved connector (20), and to receive a releasable fastening element that releasably fixes the at least one curved connector (20) to the at least one of the floor modules (10,10').

15. The modular floor (100) according to claim 13 or claim 14, **characterized in that** the central curved portion (22) of the at least one curved connector (20) comprises a flat surface comprising at least one unlocking notch (27), said unlocking notch (27) configured to receive an unlocking tool that allows deactivating the locking mechanism (26) by a rotation movement of the at least one curved connector (20) towards an unlocking position of the at least one curved connector (20).

## Patentansprüche

1. Ein Bodenmodul (10) zur Bildung eines modularen Bodens (100) aus zwei oder mehr miteinander verbundenen Bodenmodulen (10,10'), die flexibel durch einen gebogenen Verbinder (20) miteinander verbunden sind, wobei der gebogene Verbinder (20) aus einem einteiligen Körper besteht, der einen gebogenen Randbereich (21) und einen zentralen gebogenen Bereich (22) umfasst;
wobei zwischen dem gebogenen Randbereich (21) und dem zentralen gebogenen Bereich (22) mindestens ein Durchgang (23) vorhanden ist, der gebogene Wände aufweist, die durch die gebogenen Rand- und zentralen Bereiche (21,22) gebildet werden, ein Eingangsende (24) und ein Verriegelungsende (25), wobei das Verriegelungsende (25) einen Verriegelungsmechanismus (26) umfasst;
wobei das Bodenmodul (10) aus einem einteiligen Körper besteht, der einen unteren Bereich (11) und einen oberen Bereich (12) umfasst, wobei die oberen und unteren Bereiche (11,12) relativ zueinander angeordnet sind, wodurch Randüberlappungsbereiche (13,14) zur Überlappung mit den Randüberlappungsbereichen (13, 14) eines benachbarten solchen Bodenmoduls (10) erzeugt werden;
wobei ein unterer Randüberlappungsbereich (13) im unteren Bereich (11) des Körpers angeordnet ist und ein oberer Randüberlappungsbereich (14) im oberen Bereich des Körpers (12) angeordnet ist;
**dadurch gekennzeichnet, dass** der obere Überlappungsbereich (14) mindestens eine obere gebogene Kupplungsfläche (17) umfasst und der untere Überlappungsbereich (13) mindestens eine untere gebogene Kupplungsfläche (16) umfasst, wobei die mindestens eine obere gebogene Kupplungsfläche (17) und die mindestens eine untere gebogene Kupplungsfläche (16) einen gebogenen Verbinder-Schlitz (17a,16a) umfassen;
wobei, wenn die Bodenmodule (10,10') gekoppelt sind, die mindestens eine obere gebogene Kupplungsfläche (17) so konfiguriert ist, dass sie mit der mindestens einen unteren gebogenen Kupplungsfläche (16) der gekoppelten Bodenmodule (10,10') gekoppelt wird, und mittels des gebogenen Verbinders (20) eine relative Bewegung zwischen den gekoppelten Bodenmodulen (10,10') flexibel in den drei kartesischen Achsen eingeschränkt wird, wodurch eine flexible Kopplung zwischen den gekoppelten Bodenmodulen (10,10') erzeugt wird, wobei der gebogene Verbinder (20) die Kopplung zwischen den oberen und unteren gebogenen Kupplungsflächen (17,16) durch eine Drehbewegung durch den gebogenen Verbinder-Schlitz (17a,16a) verriegelt, sodass die mindestens ein Durchgang (23) des gebogenen Verbinders (20) die gekoppelten oberen und unteren gebogenen Kupplungsflächen (17, 16) aufnimmt, die das mindestens ein Durchgang (23) vom Eingangsende (24) betreten und durch das mindestens ein Durchgang (23) zum Verriegelungsende (25) gleiten, wodurch der Verriegelungsmechanismus (26) des gebogenen Verbinders (20) aktiviert wird, der den gebogenen Verbinder (20) in einer flexiblen Verriegelungsposition des gebogenen Verbinders (20) verriegelt;
wobei, in der flexiblen Verriegelungsposition des gebogenen Verbinders (20), das mindestens ein Durchgang (23) einen Verriegelungsraum umfasst, der eine relative Gleite zwischen den gekoppelten oberen und unteren gebogenen Kupplungsflächen (17,16) ermöglicht, wodurch der gebogene Verbinder (20) in der flexiblen Verriegelungsposition des gebogenen Verbinders (20) verriegelt wird und die gekoppelten Bodenmodule (10,10') flexibel miteinander verbunden werden.

2. Das Bodenmodul (10) gemäß Anspruch 1, **dadurch gekennzeichnet, dass** es mindestens vier untere gebogene Kupplungsflächen (16) im unteren Randüberlappungsbereich (13) und mindestens vier obere gebogene Kupplungsflächen (17) im oberen Randüberlappungsbereich (14) umfasst, zur Anordnung von mindestens zwei gebogenen Verbindern (20) an jeder Kante des Bodenmoduls (10).

3. Das Bodenmodul (10) gemäß Anspruch 1 oder Anspruch 2, **dadurch gekennzeichnet, dass** es mindestens eine untere Stützfläche (13a) im unteren Randüberlappungsbereich (13) und mindestens eine obere Stützfläche (14a) im oberen Randüberlappungsbereich (14) umfasst, wobei, wenn die Bodenmodule (10,10') gekoppelt sind, die unteren und oberen Stützflächen (13a,14a) der gekoppelten Bodenmodule (10,10') miteinander in Kontakt treten und mindestens einen Stützbereich erzeugen.

4. Das Bodenmodul (10) gemäß Anspruch 3, **dadurch gekennzeichnet, dass** die unteren und oberen Stützflächen (13a,14a) mindestens ein Befestigungsloch (P) zum Fixieren der gekoppelten Bodenmodule (10,10') mittels eines Befestigungselements umfassen, wodurch die gekoppelten Bodenmodule (10,10') im Stützbereich fixiert werden.

5. Das Bodenmodul (10) gemäß einem der Ansprüche 1 bis 4, **dadurch gekennzeichnet, dass** es mindestens ein Einpassloch (13b) im unteren Randüberlappungsbereich (13) und mindestens einen Einpassvorsprung (14b) im oberen Randüberlappungsbereich (14) umfasst, wobei, wenn die Bodenmodule (10,10') gekoppelt sind, das mindestens ein Einpassloch (13b) so konfiguriert ist, dass es den mindestens einen Einpassvorsprung (14b) der gekoppelten Bodenmodule (10,10') aufnimmt.

6. Das Bodenmodul (10) gemäß Anspruch 5, **dadurch gekennzeichnet, dass** der mindestens eine Einpassvorsprung (14b) im oberen Randüberlappungsbereich (14) hohl ist und so konfiguriert ist, dass er einen Pfahl (E) aufnimmt, der es ermöglicht, die gekoppelten Bodenmodule (10,10') am Boden zu fixieren.

7. Das Bodenmodul (10) gemäß einem der Ansprüche 1 bis 6, **dadurch gekennzeichnet, dass** es mindestens ein unteres Verriegelungsloch (13c) im unteren Randüberlappungsbereich (13) und mindestens ein oberes Verriegelungsloch (14c) im oberen Randüberlappungsbereich (14) umfasst, wobei, wenn die Bodenmodule (10,10') gekoppelt sind, das mindestens ein unteres Verriegelungsloch (13c) mit dem mindestens einen oberen Verriegelungsloch (14c) der gekoppelten Bodenmodule (10,10') ausgerichtet ist, sodass die unteren und oberen Verriegelungslöcher (13c,14c) so konfiguriert sind, dass sie einen drehbaren Verbinder (30) aufnehmen, der, wenn er in die unteren und oberen Verriegelungslöcher (13c,14c) eingeführt und in eine Verriegelungsposition des drehbaren Verbinders (30) gedreht wird, eine relative vertikale Bewegung zwischen den gekoppelten Bodenmodulen (10,10') einschränkt.

8. Das Bodenmodul (10) gemäß Anspruch 7, **dadurch gekennzeichnet, dass**:
- das untere Verriegelungsloch (13c) einen unteren Entsperrabschnitt und einen unteren Verriegelungsabschnitt umfasst, wobei der untere Verriegelungsabschnitt mit einem Verriegelungselement (31) am drehbaren Verbinder (30) in Druckkontakt kommt, um die relative vertikale Bewegung zwischen den in der Verriegelungsposition des drehbaren Verbinders (30) gekoppelten Bodenmodulen (10,10') zu verriegeln; und
- das obere Verriegelungsloch (14c) umfasst in Richtung der Drehverbindung (30) Rotation:
∘ einen Einführungsbereich zum Einführen der Drehverbindung (30) in das obere Verriegelungsloch (14c);
∘ einen oberen Verriegelungsbereich, der mit dem unteren Verriegelungsbereich und mit der Verriegelungsposition der Drehverbindung (30) passt, wobei der obere Verriegelungsbereich zusätzlich die Rückkehr der Drehverbindung (30) in den Einführungsbereich dauerhaft verhindert und die Drehverbindung (30) mit dem oberen Verriegelungsloch (14c) verbindet;
∘ einen Übergangsbereich, durch den der Druckkontakt zwischen dem Verriegelungselement (31) der Drehverbindung (30) und dem unteren Verriegelungsbereich allmählich gelöst wird; und
∘ einen oberen Freigabebereich, der im unteren Freigabebereich passt, in dem die gekoppelten Bodenmodule (10,10') entkoppelt werden können;
wobei die Bewegung der Drehverbindung (30) zwischen dem oberen Verriegelungsbereich, dem Übergangsbereich und dem oberen Entsperrbereich in einer Verriegelungsrichtung und in einer Entsperrrichtung durch Druckpassmechanismen, die sich zwischen den genannten Bereichen befinden, durchgeführt werden kann, wobei die Drehverbindung (30) mindestens einen Druckpassvorsprung (32) umfasst, der mit Druckpassflanschen und Passnuten im oberen Verriegelungsloch (14c) zusammenarbeitet.

9. Das Bodenmodul (10) gemäß einem der Ansprüche 1 bis 8, **dadurch gekennzeichnet, dass** es eine Abdeckung (40) umfasst, die mit der unteren Fläche des unteren Teils (11) des Bodenmodul-Körpers verbunden ist, wobei die Abdeckung (40) ein Abdeckgitter (42) umfasst, das mit einem Bodenmodulgitter (18) passt, das auf der unteren Fläche des unteren Teils (11) des Bodenmoduls (10) angeordnet ist, wobei die Abdeckung (40) eine geschlitzte Unterseite für den Kontakt mit dem Boden umfasst, und wobei die Abdeckung (40) und die Unterseite mindestens eine Perforation umfassen, um ein Befestigungselement (41) aufzunehmen, das die Abdeckung (40) am Bodenmodul-Körper befestigt.

10. Ein modulares Boden (100), das aus zwei oder mehr gekoppelten Bodenmodulen (10,10') gemäß einem der Ansprüche 1 bis 9 und mindestens einem gebogenen Verbinder (20) besteht, der aus einem einteiligen Körper mit einem perimetergebogenen Abschnitt (21) und einem zentralen gebogenen Abschnitt (22) besteht;
wobei zwischen dem perimetergebogenen Abschnitt (21) und dem zentralen gebogenen Abschnitt (22) mindestens ein Durchgang (23) vorhanden ist, der gebogene Wände aufweist, die durch die perimetergebogenen und zentralen gebogenen Abschnitte (21,22) gebildet werden, ein Eingangsende (24) und ein Verriegelungsende (25), wobei das Verriegelungsende (25) einen Verriegelungsmechanismus (26) umfasst;
wobei mindestens ein Teil des oberen perimeterüberlappenden Bereichs (14) eines ersten Bodenmoduls (10) mit mindestens einem Teil des unteren perimeterüberlappenden Bereichs (13) eines zweiten Bodenmoduls (10') gekoppelt ist, sodass mindestens eine obere gebogene Kupplungsfläche (17) des ersten Bodenmoduls (10) mit mindestens einer unteren gebogenen Kupplungsfläche (16) des zweiten Bodenmoduls (10') gekoppelt ist, was zur Kopplung des ersten Bodenmoduls mit dem zweiten Bodenmodul (10') führt;
wobei die Kopplung zwischen der mindestens einer oberen gebogenen Kupplungsfläche (17) und der mindestens einer unteren gebogenen Kupplungsfläche (16) durch eine Drehbewegung des mindestens einen gebogenen Verbinders (20) über die gebogenen Verbinder-Schlitze (16a, 17a), die die genannten oberen und unteren gebogenen Kupplungsflächen (16, 17) haben, verriegelt wird, sodass der mindestens eine Durchgang (23) des mindestens einen gebogenen Verbinders (20) die genannten gekoppelten oberen und unteren gebogenen Kupplungsflächen (16, 17) aufnimmt, die das mindestens eine Durchgang (23) vom Eingangsende (24) betreten und durch das mindestens eine Durchgang (23) bis zum Verriegelungsende (25) gleiten, wodurch der Verriegelungsmechanismus (26) in einer flexiblen Verriegelungsposition des mindestens einen gebogenen Verbinders (20) aktiviert wird, sodass die gebogenen Wände des Durchgangs (23) eine relative Bewegung zwischen den in den drei kartesischen Achsen gekoppelten Bodenmodulen (10,10') flexibel einschränken und eine flexible Kopplung zwischen den gekoppelten Bodenmodulen erzeugen;
wobei im flexiblen Verriegelungsposition des mindestens einen gebogenen Verbinders (20) der mindestens eine Durchgang (23) einen Verriegelungsraum umfasst, der eine relative Gleiten zwischen den gekoppelten oberen und unteren gebogenen Kupplungsflächen (16, 17) ermöglicht, wobei der mindestens eine gebogene Verbinder (20) in seiner Verriegelungsposition des mindestens einen gebogenen Verbinders (20) verriegelt wird und die gekoppelten Bodenmodule (10,10') flexibel miteinander befestigt werden.

11. Das modulare Boden (100) gemäß Anspruch 10, **dadurch gekennzeichnet, dass** es mindestens einen drehbaren Verbinder (30) umfasst, der, wenn die Bodenmodule (10,10') gekoppelt sind, in unteren und oberen Verriegelungslöchern (13c,14c) der gekoppelten Bodenmodule (10,10') aufgenommen wird, wobei, wenn der drehbare Verbinder (30) in die oberen und unteren Verriegelungslöcher (13c,14c) eingeführt und in eine Verriegelungsposition der drehbaren Verbindung (30) gedreht wird, eine relative vertikale Bewegung zwischen den gekoppelten Bodenmodulen (10,10') einschränkt.

12. Das modulare Boden (100) gemäß Anspruch 10, **dadurch gekennzeichnet, dass** es perimeter Rampenabschnitte (50) umfasst, wobei die genannten perimeter Rampenabschnitte (50) umfassen:
- einen Rampenunterüberlappungsbereich, der konfiguriert ist, um mit dem oberen perimeterüberlappenden Bereich (14) eines Bodenmoduls (10) zu koppeln; oder
- einen Rampenoberüberlappungsbereich, der konfiguriert ist, um mit dem unteren perimeterüberlappenden Bereich (13) eines Bodenmoduls (10) zu koppeln; und,
wobei das modulare Boden (100) auch Eckenabschnitte (51) umfasst, die Teil der Eckenperimeter-Rampenabschnitte (50) sind, die einen einteiligen Körper umfassen, oder die unabhängig von den perimeter Rampenabschnitten (50) sind.

13. Das modulare Boden (100) gemäß einem der Ansprüche 10 bis 12, **dadurch gekennzeichnet, dass** der Verriegelungsmechanismus (26) des mindestens einen gebogenen Verbinders (20) einen Verriegelungsflansch und eine Verriegelungsnut (25a) innerhalb des mindestens einen Durchgangs (23) an seinem Verriegelungsende (25) umfasst, wobei die genannte Verriegelungsnut (25a) konfiguriert ist, um durch Druckpassung einen Verriegelungsprojektion (17b) aufzunehmen, die auf der oberen gebogenen Kupplungsfläche (17) angeordnet ist, wodurch der mindestens eine gebogene Verbinder (20) in seiner flexiblen Verriegelungsposition durch die Druckpassung, die den Verriegelungsmechanismus (26) aktiviert, verriegelt wird.

14. Der modulare Boden (100) gemäß Anspruch 13, **dadurch gekennzeichnet, dass** der mindestens eine Durchgang (23) des mindestens einen gebogenen Verbinders (20) einen Befestigungsmechanismus aufweist, der an seinem Eingangsende angeordnet ist, wobei der Befestigungsmechanismus so konfiguriert ist, dass er mit mindestens einem der in der Verriegelungsposition des mindestens einen gebogenen Verbinders (20) gekoppelten Bodenmodule (10,10') in Kontakt tritt und ein lösbares Befestigungselement aufnimmt, das den mindestens einen gebogenen Verbinder (20) lösbar an mindestens einem der Bodenmodule (10,10') befestigt.

15. Der modulare Boden (100) gemäß Anspruch 13 oder Anspruch 14, **dadurch gekennzeichnet, dass** der zentrale gebogene Abschnitt (22) des mindestens einen gebogenen Verbinders (20) eine flache Oberfläche aufweist, die mindestens eine Entriegelungsnut (27) umfasst, wobei die Entriegelungsnut (27) so konfiguriert ist, dass sie ein Entriegelungswerkzeug aufnimmt, das es ermöglicht, den Verriegelungsmechanismus (26) durch eine Drehbewegung des mindestens einen gebogenen Verbinders (20) in eine Entriegelungsposition des mindestens einen gebogenen Verbinders (20) zu deaktivieren.

## Revendications

1. Un module de sol (10) pour former un sol modulaire (100) de deux ou plusieurs modules de sol couplés (10,10') fixés de manière flexible ensemble par un connecteur courbé (20), où le connecteur courbé (20) est formé d'un corps monobloc comprenant une portion courbée périmétrique (21) et une portion courbée centrale (22);
où, entre la portion courbée périmétrique (21) et la portion courbée centrale (22), il y a au moins un passage (23) qui a des parois courbées formées par les portions courbées périmétrique et centrale (21,22), une extrémité d'entrée (24) et une extrémité de verrouillage (25), ladite extrémité de verrouillage (25) comprenant un mécanisme de verrouillage (26);
où le module de sol (10) est formé d'un corps monobloc comprenant une portion inférieure (11) et une portion supérieure (12), où les portions supérieure et inférieure (11,12) sont disposées l'une par rapport à l'autre, générant des zones de chevauchement périmétriques (13,14) pour chevaucher avec les zones de chevauchement périmétriques (13, 14) d'un module de sol adjacent (10);
où, une zone de chevauchement périmétrique inférieure (13) est disposée dans la portion inférieure (11) du corps et une zone de chevauchement périmétrique supérieure (14) est disposée dans la portion supérieure du corps (12);
**caractérisé en ce que** la zone de chevauchement supérieure (14) comprend au moins une surface de couplage courbée supérieure (17) et la zone de chevauchement inférieure (13) comprend au moins une surface de couplage courbée inférieure (16), ladite au moins une surface de couplage courbée supérieure (17) et ladite au moins une surface de couplage courbée inférieure (16) comprenant une fente de connecteur courbé (17a,16a);
où, lorsque les modules de sol (10,10') sont couplés, la ou les surfaces de couplage courbées supérieures (17) sont configurées pour se coupler à la ou aux surfaces de couplage courbées inférieures (16) des modules de sol couplés (10,10'), et par le biais du connecteur courbé (20), un mouvement relatif entre les modules de sol couplés (10,10') étant contraint de manière flexible dans les trois axes cartésiens générant un couplage flexible entre les modules de sol couplés (10,10'), où ledit connecteur courbé (20) verrouille le couplage entre les surfaces de couplage courbées supérieures et inférieures (17,16) par un mouvement de rotation de celles-ci à travers la fente de connecteur courbé (17a,16a), de sorte que le ou les passages (23) du connecteur courbé (20) reçoivent lesdites surfaces de couplage courbées supérieures et inférieures (17, 16) qui entrent dans le ou les passages (23) par l'extrémité d'entrée (24) et glissent à travers ledit ou les passages (23) jusqu'à l'extrémité de verrouillage (25), activant le mécanisme de verrouillage (26) du connecteur courbé (20), verrouillant le connecteur courbé (20) dans une position de verrouillage flexible du connecteur courbé (20);
où, dans la position de verrouillage flexible du connecteur courbé (20), le ou les passages (23) comprennent un espace de verrouillage qui permet un glissement relatif entre les surfaces de couplage courbées supérieures et inférieures (17,16), verrouillant le connecteur courbé (20) dans la position de verrouillage flexible du connecteur courbé (20) et fixant de manière flexible les modules de sol couplés (10,10') ensemble.

2. Le module de sol (10) selon la revendication 1, **caractérisé en ce qu'**il comprend au moins quatre surfaces de couplage courbées inférieures (16) dans la zone de chevauchement périmétrique inférieure (13) et au moins quatre surfaces de couplage courbées supérieures (17) dans la zone de chevauchement périmétrique supérieure (14), pour l'arrangement d'au moins deux connecteurs courbés (20) sur chaque bord du module de sol (10).

3. Le module de sol (10) selon la revendication 1 ou la revendication 2, **caractérisé en ce qu'**il comprend au moins une surface de support inférieure (13a) dans la zone de chevauchement périmétrique inférieure (13) et au moins une surface de support supérieure (14a) dans la zone de chevauchement périmétrique supérieure (14), où, lorsque les modules de sol (10,10') sont couplés, les surfaces de support inférieure et supérieure (13a,14a) des modules de sol couplés (10,10') se contactent générant au moins une zone de support.

4. Le module de sol (10) selon la revendication 3, **caractérisé en ce que** les surfaces de support inférieure et supérieure (13a,14a) comprennent au moins un trou de fixation (P) pour fixer les modules de sol couplés (10,10') par le biais d'un élément de fixation, fixant lesdits modules de sol couplés (10,10') à la zone de support.

5. Le module de sol (10) selon l'une des revendications 1 à 4, **caractérisé en ce qu'**il comprend au moins un trou d'ajustement (13b) dans la zone de chevauchement périmétrique inférieure (13) et au moins une projection d'ajustement (14b) dans la zone de chevauchement périmétrique supérieure (14), où, lorsque les modules de sol (10,10') sont couplés, le ou les trous d'ajustement (13b) sont configurés pour recevoir la ou les projections d'ajustement (14b) des modules de sol couplés (10,10').

6. Le module de sol (10) selon la revendication 5, **caractérisé en ce que** la ou les projections d'ajustement (14b) dans la zone de chevauchement périmétrique supérieure (14) sont creuses et sont configurées pour recevoir un pieu (E) qui permet de fixer les modules de sol couplés (10,10') au sol.

7. Le module de sol (10) selon l'une des revendications 1 à 6, **caractérisé en ce qu'**il comprend au moins un trou de verrouillage inférieur (13c) dans la zone de chevauchement périmétrique inférieure (13) et au moins un trou de verrouillage supérieur (14c) dans la zone de chevauchement périmétrique supérieure (14), où, lorsque les modules de sol (10,10') sont couplés, le ou les trous de verrouillage inférieur (13c) s'alignent avec le ou les trous de verrouillage supérieur (14c) des modules de sol couplés (10,10'), de sorte que lesdits trous de verrouillage inférieur et supérieur (13c,14c) sont configurés pour recevoir un connecteur rotatif (30) qui, lorsqu'il est inséré dans les trous de verrouillage inférieur et supérieur (13c,14c) et tourné dans une position de verrouillage du connecteur rotatif (30), restreint un mouvement vertical relatif entre les modules de sol couplés (10,10').

8. Le module de sol (10) selon la revendication 7, **caractérisé en ce que** :
- le trou de verrouillage inférieur (13c) comprend une section de déverrouillage inférieure et une section de verrouillage inférieure, où la section de verrouillage inférieure entre en contact de pression avec un élément de verrouillage (31) au niveau du connecteur rotatif (30), afin de verrouiller le mouvement vertical relatif entre les modules de sol (10,10') couplés dans la position de verrouillage du connecteur rotatif (30); et
- le trou de verrouillage supérieur (14c) comprend, dans la direction de la rotation du connecteur rotatif (30) :
∘ une section d'insertion pour insérer le connecteur rotatif (30) dans le trou de verrouillage supérieur (14c) ;
∘ une section de verrouillage supérieure qui s'adapte à la section de verrouillage inférieure et à la position de verrouillage du connecteur rotatif (30), où la section de verrouillage supérieure empêche également le retour du connecteur rotatif (30) vers la section d'insertion, joignant de manière permanente le connecteur rotatif (30) au trou de verrouillage supérieur (14c) ;
∘ une section de transition à travers laquelle le contact de pression entre l'élément de verrouillage (31) du connecteur rotatif (30) et la section de verrouillage inférieure est progressivement libéré ; et
∘ une section de libération supérieure qui s'adapte à la section de libération inférieure dans laquelle les modules de sol couplés (10,10') peuvent être découplés ;
où le mouvement du connecteur rotatif (30) entre la section de verrouillage supérieure, la section de transition et la section de déverrouillage supérieure peut être effectué dans une direction de verrouillage et dans une direction de déverrouillage par des mécanismes de pression situés entre ces sections, où le connecteur rotatif (30) comprend au moins une projection de pression (32) coopérant avec des flasques de pression et des encoches de montage dans le trou de verrouillage supérieur (14c).

9. Le module de sol (10) selon l'une des revendications 1 à 8, **caractérisé en ce qu'**il comprend un couvercle (40) qui se connecte à la face inférieure de la partie inférieure (11) du corps du module de sol, où ledit couvercle (40) comprend une grille de couvercle (42) qui s'adapte à une grille de module de sol (18) disposée sur la face inférieure de ladite partie inférieure (11) du module de sol (10), où ledit couvercle (40) comprend une face inférieure fendue pour le contact avec le sol, et où ledit couvercle (40) et ladite face inférieure comprennent au moins une perforation pour recevoir un élément de fixation (41) qui fixe le couvercle (40) au corps du module de sol.

10. Un sol modulaire (100) formé par deux ou plusieurs modules de sol couplés (10,10') selon l'une des revendications 1 à 9 et au moins un connecteur courbé (20) formé d'un corps monobloc comprenant une portion courbée périmétrique (21) et une portion courbée centrale (22) ;
où, entre la portion courbée périmétrique (21) et la portion courbée centrale (22), il y a au moins un passage (23) qui a des murs courbés formés par les portions courbées périmétrique et centrale (21,22), une extrémité d'entrée (24) et une extrémité de verrouillage (25), ladite extrémité de verrouillage (25) comprenant un mécanisme de verrouillage (26) ;
où au moins une partie de la zone de chevauchement périmétrique supérieure (14) d'un premier module de sol (10) est couplée à au moins une partie de la zone de chevauchement périmétrique inférieure (13) d'un second module de sol (10'), de sorte qu'au moins une surface de couplage courbée supérieure (17) du premier module de sol (10) se couple avec au moins une surface de couplage courbée inférieure (16) du second module de sol (10'), résultant en le couplage du premier module de sol avec le second module de sol (10') ;
où le couplage entre la ou les surfaces de couplage courbées supérieures (17) et la ou les surfaces de couplage courbées inférieures (16) est verrouillé par un mouvement de rotation de la ou des connecteurs courbés (20) à travers les fentes du connecteur courbé (16a, 17a) que ces surfaces de couplage courbées supérieures et inférieures (16, 17) possèdent, de sorte que le ou les passages (23) du ou des connecteurs courbés (20) reçoivent lesdites surfaces de couplage courbées supérieures et inférieures couplées (16, 17) qui entrent dans le ou les passages (23) par l'extrémité d'entrée (24) et glissent à travers ledit ou les passages (23) jusqu'à l'extrémité de verrouillage (25), activant le mécanisme de verrouillage (26) dans une position de verrouillage flexible du ou des connecteurs courbés (20), de sorte que les murs courbés du passage (23) restreignent de manière flexible un mouvement relatif entre les modules de sol (10,10') couplés dans les trois axes cartésiens générant un couplage flexible entre les modules de sol couplés ;
où, dans la position de verrouillage flexible du ou des connecteurs courbés (20), le ou les passages (23) comprennent un espace de verrouillage qui permet un glissement relatif entre les surfaces de couplage courbées supérieures et inférieures couplées (16, 17), verrouillant le ou les connecteurs courbés (20) dans la position de verrouillage du ou des connecteurs courbés (20) et fixant de manière flexible les modules de sol couplés (10,10') les uns aux autres.

11. Le sol modulaire (100) selon la revendication 10, **caractérisé en ce qu'**il comprend au moins un connecteur rotatif (30) qui, lorsque les modules de sol (10,10') sont couplés, est reçu dans les trous de verrouillage inférieurs et supérieurs (13c,14c) des modules de sol couplés (10,10'), où, lorsque le connecteur rotatif (30) est inséré dans les trous de verrouillage supérieurs et inférieurs (13c,14c) et est tourné vers une position de verrouillage du connecteur rotatif (30), il restreint un mouvement vertical relatif entre les modules de sol couplés (10,10').

12. Le sol modulaire (100) selon la revendication 10, **caractérisé en ce qu'**il comprend des sections de rampe périmétriques (50), où lesdites sections de rampe périmétriques (50) comprennent :
- une zone de chevauchement inférieure de rampe configurée pour se coupler à la zone de chevauchement périmétrique supérieure (14) d'un module de sol (10) ; ou
- une zone de chevauchement supérieure de rampe configurée pour se coupler à la zone de chevauchement périmétrique inférieure (13) d'un module de sol (10) ; et,
où le sol modulaire (100) comprend également des sections d'angle (51) qui font partie des sections de rampe périmétriques d'angle (50) comprenant un corps monobloc, ou qui sont indépendantes des sections de rampe périmétriques (50).

13. Le sol modulaire (100) selon l'une des revendications 10 à 12, **caractérisé en ce que** le mécanisme de verrouillage (26) du ou des connecteurs courbés (20) comprend une flasque de verrouillage et une encoche de verrouillage (25a) à l'intérieur du ou des passages (23) à son extrémité de verrouillage (25), où ladite encoche de verrouillage (25a) est configurée pour recevoir, par pression, une projection de verrouillage (17b) disposée sur la surface de couplage courbée supérieure (17), verrouillant le ou les connecteurs courbés (20) dans sa position de verrouillage flexible par l'activation de ce mécanisme de verrouillage (26) par pression.

14. Le sol modulaire (100) selon la revendication 13, **caractérisé en ce que** le ou les passages (23) du ou des connecteurs courbés (20) comprennent un mécanisme de fixation disposé à son extrémité d'entrée, ledit mécanisme de fixation étant configuré pour entrer en contact avec au moins un des modules de sol (10,10') couplés dans la position de verrouillage du ou des connecteurs courbés (20), et pour recevoir un élément de fixation libérable qui fixe de manière libérable le ou les connecteurs courbés (20) au moins à l'un des modules de sol (10,10').

15. Le sol modulaire (100) selon la revendication 13 ou la revendication 14, **caractérisé en ce que** la portion courbée centrale (22) du ou des connecteurs courbés (20) comprend une surface plate comprenant au moins une encoche de déverrouillage (27), ladite encoche de déverrouillage (27) étant configurée pour recevoir un outil de déverrouillage qui permet de désactiver le mécanisme de verrouillage (26) par un mouvement de rotation du ou des connecteurs courbés (20) vers une position de déverrouillage du ou des connecteurs courbés (20).
